(19) **Europäisches Patentamt European Patent Office Office européen des brevets**

(11) **EP 4 444 588 B1**

(12) **FASCICULE DE BREVET EUROPÉEN**

(45) Date de publication et mention de la délivrance du brevet:
**03.09.2025 Bulletin 2025/36**

(21) Numéro de dépôt: **22813671.9**

(22) Date de dépôt: **02.11.2022**

(51) Classification Internationale des Brevets (IPC):
**B60W 50/00** *(2006.01)*    **B60W 30/14** *(2006.01)*
**B60W 40/04** *(2006.01)*

(52) Classification Coopérative des Brevets (CPC):
**B60W 30/14; B60W 40/04; B60W 50/0097;**
B60W 2552/30; B60W 2554/803; B60W 2554/804

(86) Numéro de dépôt international:
**PCT/FR2022/052060**

(87) Numéro de publication internationale:
**WO 2023/105128 (15.06.2023 Gazette 2023/24)**

(54) **PROCÉDÉ ET DISPOSITIF DE CONTRÔLE D'UN SYSTÈME DE RÉGULATION ADAPTATIVE DE VITESSE D'UN VÉHICULE**

VERFAHREN UND VORRICHTUNG ZUR STEUERUNG EINES SYSTEMS ZUR ADAPTIVEN GESCHWINDIGKEITSREGELUNG EINES FAHRZEUGS

METHOD AND DEVICE FOR CONTROLLING A VEHICLE'S ADAPTIVE CRUISE CONTROL SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **06.12.2021 FR 2112979**

(43) Date de publication de la demande:
**16.10.2024 Bulletin 2024/42**

(73) Titulaire: **Stellantis Auto SAS 78300 Poissy (FR)**

(72) Inventeurs:
• **VIVET, Luc 75016 PARIS 16 (FR)**
• **TOUIL, Lhassane Kenitra, 14000 (MA)**

(74) Mandataire: **ESIP Stellantis Auto SAS Service REIP - YT800 43, rue Jean Pierre Timbaud 78300 Poissy (FR)**

(56) Documents cités:
WO-A1-2005/037592    FR-A1- 3 087 732
FR-A1- 3 092 305    US-A1- 2020 189 592

## Description

### Domaine technique

La présente invention concerne les procédés et dispositifs de contrôle d'un système de régulation adaptative de vitesse d'un véhicule, notamment un véhicule automobile. La présente invention concerne également un procédé et un dispositif de régulation de vitesse d'un véhicule. La présente invention concerne également un procédé et un dispositif de contrôle d'un véhicule, notamment un véhicule autonome.

### Arrière-plan technologique

Certains véhicules contemporains sont équipés de fonctions ou système(s) ou d'aide à la conduite, dit ADAS (de l'anglais « Advanced Driver-Assistance System » ou en français « Système d'aide à la conduite avancé »).

Parmi ces systèmes, le système de régulation adaptative de vitesse, dit ACC (de l'anglais « Adaptive Cruise Control ») a pour fonction première la régulation automatiquement, de façon adaptative, de la vitesse des véhicules qui en sont équipés en fonction de leur environnement. Un tel système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule.

Ces informations d'environnement correspondent par exemple à la distance entre le véhicule équipé du système ACC et un véhicule circulant devant, à la vitesse (par exemple relative) du véhicule circulant devant, à l'accélération du véhicule circulant devant et/ou à une vitesse limite réglementaire. Un tel véhicule est appelé véhicule cible ou objet cible du système ACC. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule.

Les informations d'environnement d'un véhicule sont par exemple obtenues de capteurs embarqués dans le véhicule, tels que des radars par exemple. Ces informations sont particulièrement importantes pour un véhicule, par exemple pour améliorer la sécurité du véhicule en prenant en compte l'environnement qui l'entoure, notamment les autres véhicules.

Le confort des passagers d'un véhicule est un autre facteur important, notamment pour l'acceptation des systèmes d'aide à la conduite des véhicules. Par exemple, une accélération ou une décélération trop importante est une cause d'inconfort pour les passagers d'un véhicule, notamment lorsque l'accélération est contrôlée par un système ACC. Des accélérations ou décélérations importantes sont parfois dues à une désélection tardive du véhicule cible. Le compromis entre le confort et la sécurité des passagers est parfois difficile à trouver.

En outre, l'état de la technique est connu du document FR3087732A1, correspondant au préambule de la revendication 1.

### Résumé de la présente invention

Un objet de la présente invention est de résoudre au moins l'un des problèmes de l'arrière-plan technologique décrit précédemment.

Un autre objet de la présente invention est d'améliorer le fonctionnement d'un système ACC d'un véhicule.

Selon un premier aspect, la présente invention concerne un procédé de contrôle d'un système de régulation adaptative de vitesse, dit système ACC, d'un premier véhicule, le procédé comprenant les étapes suivantes :

- détermination d'une première information représentative d'une vitesse longitudinale et d'une deuxième information représentative d'une vitesse latérale d'un deuxième véhicule correspondant à un véhicule cible dudit système ACC ;

caractérisé en ce que le procédé comprend les étapes de :

- détermination d'un indicateur de probabilité que le deuxième véhicule effectue un virage ayant un rayon de courbure déterminé en fonction d'un rapport de la première information sur la deuxième information ;
- détermination d'un indicateur de pertinence associé au deuxième véhicule en fonction de l'indicateur de probabilité ;
- contrôle du système ACC en fonction de l'indicateur de pertinence.

Selon une variante, l'indicateur de probabilité est fonction d'un coefficient correspondant au rapport de la somme de la vitesse latérale et d'une constante sur la valeur absolue de la vitesse longitudinale.

Selon une autre variante, la constante est égale à 2 m/s.

Selon une variante supplémentaire, l'indicateur de probabilité prend une valeur minimale déterminée pour toute valeur supérieure à une valeur maximale déterminée du coefficient et l'indicateur de probabilité prend une valeur maximale déterminée pour toute valeur inférieure à une valeur minimale déterminée du coefficient.

Selon encore une variante, la valeur minimale déterminée du coefficient est égale à 1.33 et la valeur maximale déterminée du coefficient est égale à 2.

Selon une variante additionnelle, le contrôle du système ACC comprend un ajustement d'une valeur de temps inter-véhicules de consigne en fonction de l'indicateur de pertinence.

Selon une autre variante, l'ajustement de la valeur de temps inter-véhicules de consigne est obtenu en déterminant une vitesse ajustée du deuxième véhicule, la vitesse ajustée étant déterminée en fonction d'une vitesse courante du deuxième véhicule et d'une différence entre une vitesse de consigne du système ACC et la vitesse courante, la différence étant pondérée d'un coefficient de pondération fonction de l'indicateur de pertinence.

Selon encore une variante, l'indicateur de pertinence étant compris entre 0 et 1, le coefficient de pondération étant compris entre 0 et une valeur maximale, le coefficient de pondération étant égal à sa valeur maximale lorsque l'indicateur de pertinence est compris entre 0 et une valeur déterminée inférieure à 1, le coefficient de pondération étant suivant une fonction décroissante de l'indicateur de pertinence lorsque l'indicateur de pertinence est compris entre la valeur déterminée et 1.

Selon un deuxième aspect, la présente invention concerne un dispositif de contrôle d'un système de régulation adaptative de vitesse de véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

**Brève description des figures**

D'autres caractéristiques et avantages de la présente invention ressortiront de la description des exemples de réalisation particuliers et non limitatifs de la présente invention ci-après, en référence aux figures 1 à 5 annexées, sur lesquelles :

[Fig. 1] illustre schématiquement un premier véhicule suivant un deuxième véhicule, selon un exemple de réalisation particulier et non limitatif de la présente invention ;

[Fig. 2] illustre schématiquement un indicateur de probabilité d'une présence d'un virage dans la trajectoire du deuxième véhicule de la figure 1, selon un exemple de réalisation particulier et non limitatif de la présente invention ;

[Fig. 3] illustre schématiquement un coefficient de pondération déterminé en fonction de l'indicateur de probabilité de la figure 2, selon un exemple de réalisation particulier et non limitatif de la présente invention ;

[Fig. 4] illustre schématiquement un dispositif configuré pour contrôler un système de régulation adaptative de vitesse du premier véhicule de la figure 1, selon un exemple de réalisation particulier et non limitatif de la présente invention ;

[Fig. 5] illustre un organigramme des différentes étapes d'un procédé de contrôle d'un système de régulation adaptative de vitesse du premier véhicule de la figure 1, selon un exemple de réalisation particulier et non limitatif de la présente invention.

**Description des exemples de réalisation**

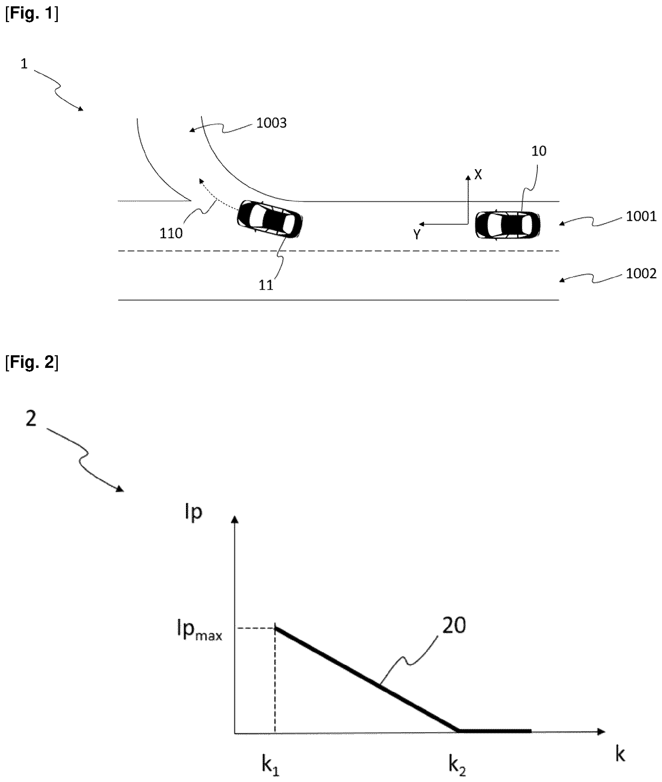

Un procédé et un dispositif de contrôle d'un système de régulation adaptative de vitesse d'un véhicule vont maintenant être décrits dans ce qui va suivre en référence conjointement aux figures 1 à 5. Des mêmes éléments sont identifiés avec des mêmes signes de référence tout au long de la description qui va suivre.

Selon un exemple particulier et non limitatif de réalisation de la présente invention, le contrôle d'un système de régulation adaptative de vitesse, dit système ACC, d'un premier véhicule ayant comme cible un deuxième véhicule circulant devant le premier véhicule comprend la détermination d'une première information représentative d'une vitesse longitudinale du deuxième véhicule et d'une deuxième information représentative d'une vitesse latérale du deuxième véhicule, par exemple à partir de données reçues de capteurs embarqués dans le premier véhicule. Un indicateur de probabilité que le deuxième véhicule effectue un virage ayant un rayon de courbure déterminé est déterminé en fonction d'un rapport de la première information sur la deuxième information. Un indicateur de pertinence associé au deuxième véhicule est déterminé en fonction de l'indicateur de probabilité. Le système ACC du premier véhicule est alors contrôlé en fonction de cet indicateur de pertinence.

L'indicateur de pertinence correspond par exemple à un facteur ou une valeur représentant la probabilité que le deuxième véhicule reste le véhicule cible du système ACC à une échéance temporelle déterminée, par exemple à 1, 2, 3, 5 ou 10 secondes.

L'indicateur de pertinence représente également une probabilité que le deuxième véhicule reste dans la voie de circulation du premier véhicule, le deuxième véhicule entamant par exemple un virage pour quitter la voie de circulation courante alors que le premier véhicule souhaite continuer sur la voie de circulation courante.

La détection d'un changement de trajectoire du deuxième véhicule est obtenue par la détermination d'un indicateur de probabilité que le deuxième véhicule soit dans un virage ou entame un virage ayant un rayon de courbure déterminé (par exemple un virage à 90°). L'indicateur de pertinence du deuxième véhicule est alors déterminé en prenant en compte la probabilité que le deuxième véhicule soit dans un virage indiquant un changement de trajectoire ou de voie de circulation par exemple, ce qui permet le cas échéant de diminuer la valeur de l'indicateur de pertinence et de désélectionner le deuxième véhicule comme objet cible du système ACC plus rapidement. Une désélection plus rapide du deuxième véhicule permet au premier véhicule de moins freiner en autorisant une distance inter-véhicules plus petite pendant une durée déterminée et courte, le deuxième véhicule étant dans un virage et s'écartant de la trajectoire du premier véhicule.

Une telle adaptation de la régulation de la vitesse du premier véhicule diminue les freinages inutiles et trop importants, notamment lorsque la vitesse longitudinale du véhicule cible (c'est-à-dire le deuxième véhicule) diminue en raison du virage pris par le deuxième véhicule.

La figure 1 illustre schématiquement un premier véhicule 10 suivant un deuxième véhicule 11 sur une portion de route d'un environnement 1, selon un exemple de réalisation particulier et non limitatif de la présente invention.

La figure 1 illustre un premier véhicule 10, par exemple un véhicule automobile, embarquant un ou plusieurs capteurs configurés pour détecter la présence d'objets dans l'environnement 1 du premier véhicule 10. Selon d'autres exemples, le premier véhicule 10 correspond à un car, un bus, un camion, un véhicule utilitaire ou une motocyclette, c'est-à-dire à un véhicule de type véhicule terrestre motorisé.

Le premier véhicule 10 correspond à un véhicule circulant sous la supervision totale d'un conducteur ou circulant dans un mode autonome ou semi-autonome. Le premier véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Selon l'exemple de la figure 1, le premier véhicule 10 circule sur une portion de route à deux voies de circulations 1001, 1002. Le premier véhicule 10 circule par exemple sur la voie de circulation de droite 1001, les deux voies de circulation 1001 et 1002 étant selon un même sens de circulation.

Selon l'exemple de la figure 1, le premier véhicule 10 suit un deuxième véhicule 11, à une distance déterminée et pouvant varier dans le temps (en fonction du comportement dynamique du premier véhicule 10 et du deuxième véhicule 11), le deuxième véhicule 11 circulant sur la même voie de circulation 1001 que le premier véhicule 10 et dans la même direction que le premier véhicule 10. Le deuxième véhicule 11 correspond à l'objet cible sélectionné par le système ACC du premier véhicule 10.

Selon l'exemple de la figure 1, le deuxième véhicule 11 entame un virage à droite, par exemple un virage à 90°, pour rejoindre une voie de circulation 1003. Selon cet exemple, le deuxième véhicule 11 est en cours de manœuvre pour quitter la voie de circulation 1001 qui est suivie par le premier véhicule 10 et qui correspond au chemin suivi par le premier véhicule 10. Lorsque la manœuvre du deuxième véhicule 11 sera achevée, c'est-à-dire lorsque le deuxième véhicule sera complètement sur la voie de circulation 1003, le chemin suivi par le deuxième véhicule 11 sera différent du chemin suivi la premier véhicule 10 et leurs trajectoires respectives seront différentes.

Un objet de la présente invention est ainsi de détecter rapidement le changement de trajectoire du deuxième véhicule 11 lorsque ce dernier entame un virage pour désélectionner rapidement le deuxième véhicule 11 comme objet cible du système ACC du premier véhicule 10 et ainsi éviter un freinage trop important du premier véhicule 10 qui serait inutile.

Le premier véhicule 10 embarque par exemple un ou plusieurs des capteurs suivants :

- un ou plusieurs radars à ondes millimétriques arrangés sur le premier véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple le deuxième véhicule 11 situé devant le premier véhicule 10 selon l'exemple de la figure 1), dans le but de détecter des obstacles et leurs distances vis-à-vis du premier véhicule 10 ; et/ou
- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple le deuxième véhicule 11) situés dans le faisceau lumineux émis et de mesurer la distance entre le capteur et chaque objet détecté ; et/ou
- une ou plusieurs caméras (associées ou non à un capteur de profondeur) pour l'acquisition d'une ou plusieurs images de l'environnement autour du premier véhicule 10 se trouvant dans le champ de vision de la ou les caméras.

Les données obtenues de ce ou ces capteurs varient selon le type de capteur. Lorsqu'il s'agit d'un radar ou d'un LIDAR, les données correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple le deuxième véhicule 11, et d'en déduire un ou plusieurs paramètres dynamiques de l'objet mobile tels que la vitesse latérale, la vitesse longitudinale et/ou les accélérations latérale et longitudinale. Ces données permettent également de déterminer les lignes au sol pour par exemple participer à la détermination d'appartenance du deuxième véhicule 11 et du premier véhicule 10 à une même voie de circulation par exemple.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le premier véhicule 10. Un tel système ADAS est configuré pour assister, voire remplacer, le conducteur du premier véhicule 10 pour contrôler le premier véhicule 10 sur son parcours.

Selon un exemple, le premier véhicule 10 embarque un système ADAS correspondant à un système de régulation automatique de la vitesse, dit système ACC. Lorsque le système ACC est activé, le système ACC a pour objectif de réaliser une accélération de consigne, appelée $A_{consigne}(t)$, qui varie au cours du temps 't' et qui permet de maintenir ou atteindre une vitesse de régulation et/ou de maintenir une distance de sécurité déterminée vis-à-vis du deuxième véhicule 11 en amont du premier véhicule 10, c'est à dire d'un véhicule cible circulant devant le premier véhicule 10 dans le même sens de circulation sur la même voie de circulation. Les données obtenues du ou des capteurs embarqués dans le premier véhicule 10 permettent au système ACC du premier véhicule 10 d'établir une valeur cible d'accélération $A_{cible}(t)$ au cours du temps 't'. L'accélération cible $A_{cible}(t)$ devient une consigne d'accélération longitudinale $A_{consigne}(t)$. Le système ACC ou un calculateur de ce système transmet par exemple les consignes d'accélérations $A_{consigne}(t)$ qu'il a déterminé au(x) calculateur(s) supervisant le fonctionnement d'un groupe motopropulseur du premier véhicule 10, notamment pour que ce(s) dernier(s) détermine(nt) les consignes de couple à générer par le groupe motopropulseur pour respecter les consignes d'accélération $A_{consigne}(t)$ et réguler la vitesse longitudinale du premier véhicule 10.

Une valeur d'accélération cible est par exemple déterminée à un instant courant $t_0$ à partir d'un ensemble de données obtenues d'un ou plusieurs capteurs de détection d'objet embarqués dans le premier véhicule 10 et/ou de paramètres de consigne entrés par exemple par le conducteur ou déterminés à partir de données sur l'environnement du premier véhicule 10. La valeur d'accélération cible (exprimée en $m.s^{-2}$) est par exemple calculée à partir de :

- données représentatives du comportement dynamique du deuxième véhicule 11 (par exemple vitesse et/ou accélération), ces données étant par exemple obtenue à partir d'un ensemble de positions prises par le deuxième véhicule 11 sur un intervalle de temps précédant l'instant courant $t_0$ pour lequel est déterminée l'accélération cible. Les données sur les positions prises par le deuxième véhicule 11 sont avantageusement déterminées à partir des données reçues du ou des capteurs de détection d'objet embarqués dans le premier véhicule 10 ;

- données représentatives du comportement dynamique du premier véhicule 10 (par exemple vitesse, accélération, distance vis-à-vis du deuxième véhicule 11), ces données étant obtenues de capteurs embarqués dans le premier véhicule 10, la distance étant par exemple obtenue à partir des données reçues du ou des capteurs de détection d'objet ; et/ou

- paramètres de consignes fournis au système ACC, tels que par exemple une vitesse cible, une distance ou un temps inter-véhicule (DIV ou TIV) cible, ces paramètres étant enregistrés en mémoire, déterminés par analyse de l'environnement (par exemple la vitesse cible est déterminée par lecture des panneaux de limitation de vitesse ou à partir de données reçus d'un système de navigation) ou entrés par un utilisateur via une interface Homme-Machine, dite IHM.

Un processus de contrôle du système ACC du premier véhicule 10 ayant pour véhicule cible le deuxième véhicule 11 est avantageusement mis en œuvre par le premier véhicule 10, c'est-à-dire par un calculateur ou une combinaison de calculateurs du système embarqué du premier véhicule 10, par exemple par le ou les calculateurs en charge de contrôler le système ACC.

Dans une première opération, une première information représentative d'une vitesse longitudinale Vx du deuxième véhicule 11 et une deuxième information représentative d'une vitesse latérale Vy du deuxième véhicule 11 sont déterminées.

La vitesse longitudinale Vx et la vitesse latérale Vy sont par exemple obtenues à partir de données représentatives d'un ensemble de positions successives temporellement dudit deuxièmes véhicules obtenues de capteurs embarqués dans le premier véhicule 10 et configurés pour détecter des objets, par exemple mobiles, dans l'environnement du premier véhicule 10. Ces données sont par exemple exprimées dans un repère (X,Y) associé au premier véhicule 10, l'axe X correspondant à l'axe longitudinale et l'axe Y à l'axe transversal ou latéral. La vitesse latérale Vy est représentative de la vitesse de déplacement du deuxième véhicule 11 selon l'axe Y et la vitesse longitudinale Vx est est représentative de la vitesse de déplacement du deuxième véhicule 11 selon l'axe X.

Selon une variante, la première information et la deuxième information sont émises par le deuxième véhicule 11 et reçues par le premier véhicule 10 via une connexion sans fil, par exemple selon un mode de communication de type véhicule vers tout, dit V2X (de l'anglais « vehicle-to-everything ») ou selon un mode de communication de type véhicule vers véhicule, dit V2V (de l'anglais « vehicle-to-vehicle »).

Dans une deuxième opération, un indicateur de probabilité que le deuxième véhicule 11 effectue un virage ayant un rayon de courbure déterminé est déterminé selon une fonction déterminée d'un rapport de la première information sur la deuxième information.

Les paramètres ou attributs dynamiques du deuxième véhicule 11 sont utilisés pour déterminer si ce deuxième véhicule 11 est en train d'effectuer un virage ayant un rayon de courbure déterminé, par exemple un rayon de courbure égal à 10 mètres est représentatif d'un virage à 90°.

La probabilité que le deuxième véhicule 11 effectue un virage ayant un rayon de courbure déterminé (par exemple égal à 80, 90 ou 100°) est déterminée selon une fonction déterminée d'un coefficient égal au rapport de la vitesse longitudinale Vx sur la vitesse latérale Vy (ou à la valeur absolue de chacune de ces grandeurs pour que le coefficient soit positif).

En effet, il est observé que le rapport de Vx sur Vy (Vx/Vy) est représentatif de la courbure d'un virage.

En effet, l'équation d'un arc de cercle ayant pour rayon de courbure r dans le repère (X,Y) du premier véhicule 10, avec x l'abscisse et y l'ordonnée vaut : $x^2 + (y - r)^2 = r^2$ (équation 1).

En dérivant temporellement cette équation, il est obtenu : $2*x*Vx + 2*(y-r)*Vy = 0$, ce qui donne :

$$Vx/Vy = (r-y)/x \text{ (équation 2).}$$

En posant k le coefficient égal à (r-y)/x, il est obtenu :

$$k = Vx/Vy \text{ (équation 3)}$$

En prenant comme hypothèse y = 2 m (correspondant à une largeur type d'un véhicule de type automobile) et pour un rayon de courbure égal à 20 m (correspondant à un rayon de courbure d'une portion de route correspondant à un rond-point), x est égal à 9 (obtenu selon l'équation 1) et k est égal à 2.

Pour un un rayon de courbure égal à 10 m par exemple (correspondant à un rayon de courbure d'un virage à 90°), x est égal à 6 m et k est égal à 1.33.

Selon une variante, et pour sécuriser les vitesses très faibles du deuxième véhicule 11, une équation (notée équation 4) de k est égale à :

[Math 1]

$$k = \frac{V_x + eps}{|V_y|}$$

avec eps une constante, par exemple eps égal à 2 m/s ou selon d'autres exemples eps est égal à 1.5 ou 2.5 m/s. **En** effet, lorsque la vitesse longitudinale est nulle ou très faible, la vitesse latérale ne veut rien dire. Les données transmises par les capteurs du premier véhicule 10 étant variable ou oscillantes, il est possible d'avoir une vitesse latérale non nulle avec une vitesse longitudinale nulle, et aussi d'avoir une vitesse latérale négative. Pour ces raisons, une valeur de décalage eps (de l'anglais « offset ») permet de sécuriser l'information sur la vitesse longitudinale Vx pour éviter d'avoir un coefficient 'k' trop faible dès que la vitesse longitudinale est faible. Par exemple, le deuxième véhicule circule à une vitesse longitudinale comprise entre 10 et 30 km/h dans un virage à 90°.

La figure 2 illustre un exemple d'une telle fonction 20 entre un indicateur de probabilité de présence du deuxième véhicule dans un virage ayant un rayon de courbure déterminé (l'indicateur de probabilité étant noté Ip en ordonné du diagramme 2) et le coefficient k déterminé par exemple à partir de l'équation 4 (en abscisse du diagramme 2).

L'indicateur de probabilité correspond par exemple à une valeur comprise entre 0 et 1 ou à une valeur comprise entre une valeur minimale et une valeur maximale, la valeur minimale étant par exemple égale à 0 et la valeur maximale étant par exemple égale à 0.2 ou encore par exemple égale à, 0.3, 0.4, 0.5, 0.6, 0.7, 0.8 ou 0.9.

Selon l'exemple de la figure 2, l'indicateur de probabilité prend une valeur maximale $Ip_{max}$ égale à 0.2 et une valeur minimale $Ip_{min}$ égale à 0.

La fonction entre l'indicateur de probabilité Ip et le coefficient k selon l'exemple de la figure 2 comprend :

- une première partie selon laquelle Ip est constant avec une valeur maximale Ipmax, par exemple égale à 0.2, pour un coefficient k compris entre 0 et une valeur minimale $k_1$, par exemple égale à 1.33 qui correspond à un virage ayant un rayon de courbure égal à 10 m, c'est-à-dire un virage à 90 ; Ip prend ainsi la valeur maximale $Ip_{max}$ pour tout virage ayant un rayon de courbure au rayon de courbure correspondant à un coefficient k égal à $k_1$ (par exemple pour tout virage ayant un rayon de courbure inférieur à 10 m lorsque $k_1$ égale 1.33)° ;
- une deuxième partie selon laquelle Ip décroit au fur et à mesure que k augmente, Ip décroissant selon une fonction linéaire pour passer du maximum égal à 0.2 au minimum égal à 0 entre $k_1$ et $k_2$ ($k_2 > k_1$), avec k2 par exemple égal à 2 qui correspond à un virage ayant un rayon de courbure égal à 20 m (correspondant par exemple à une voie de circulation sur un rond-point) ; et
- une troisième partie selon laquelle Ip est constant et vaut la valeur minimale égale à 0 pour toute valeur du coefficient k supérieure ou égale à $k_2$, c'est-à-dire pour tout virage ayant un rayon de courbure supérieur à 20 m par exemple lorsque $k_2$ égale 2.

Ainsi, la valeur de l'indicateur de probabilité est d'autant plus petite que le rayon de courbure du virage est grand dans un intervalle de rayons de courbure compris entre un minimum (par exemple 10 m) et un maximum (par exemple 20 m). L'indicateur de probabilité Ip est compris entre un minimum $Ip_{min}$ pour le rayon de courbure de valeur maximale et un maximum $Ip_{max}$ pour le rayon de courbure de valeur minimale. Pour tout virage ayant un rayon de courbure inférieur au rayon de courbure minimal, Ip vaut $Ip_{max}$. Pour tout virage ayant un rayon de courbure supérieur au rayon de courbure maximal, Ip vaut $Ip_{min}$.

Dans une troisième opération, un indicateur de pertinence associé au deuxième véhicule 11, c'est-à-dire le véhicule cible courant du système ACC du premier véhicule 10, est déterminé en fonction de l'indicateur de probabilité Ip déterminé dans la deuxième opération.

L'indicateur de pertinence est par exemple déterminé en prenant en outre en considération une pertinence de base du véhicule cible déterminée lorsque le système ACC du premier véhicule 10 détermine ou sélectionne le deuxième véhicule 11 comme véhicule cible.

La pertinence de base prend par exemple la valeur 1 par défaut lorsque le système ACC sélectionne un véhicule comme véhicule cible, la pertinence de base associée à ce véhicule étant égale à 0 tant que ce véhicule n'a pas été sélectionné comme véhicule cible.

Selon une variante, la valeur de la pertinence de base dépend par exemple d'un indicateur de fiabilité associé à la détection du véhicule sélectionné comme étant le véhicule cible, la pertinence de base variant alors entre une valeur minimale (par exemple égale à 0.5, 0.6 ou 0.7) et une valeur maximale par exemple égale à 1.

Selon cet autre exemple, l'indicateur de pertinence final utilisé dans la suite du processus est déterminé ou calculé selon l'équation suivante :

$$I = I_{base} - Ip$$

Avec I l'indicateur de pertinence final, $I_{base}$ l'indicateur de pertinence de base et p l'indicateur de probabilité déterminé à la deuxième opération. La valeur de I est par exemple saturée ou bornée entre 0 et 1.

Dans une troisième opération, le système ACC du premier véhicule 10 est contrôlé en fonction de l'indicateur de pertinence I.

Le contrôle du système ACC comprend avantageusement un ajustement d'une valeur ou d'un paramètre de consigne du système en fonction de l'indicateur de pertinence. Par exemple, le temps inter-véhicules fourni en consigne ($TIV_{consigne}$) ou comme cible ($TIV_{cible}$) est ajusté en fonction de l'indicateur de pertinence.

Par exemple, la valeur cible ou de consigne du TIV est choisie par le conducteur parmi un ensemble de valeurs, par exemple parmi un ensemble comprenant une valeur haute (par exemple égale à 2 s), une valeur intermédiaire (par exemple égale à 1.5 s) et une valeur basse (par exemple égale à 1 s).

La valeur cible ou de consigne est par exemple ajustée de manière à être :

- maintenue lorsque l'indicateur de pertinence prend sa valeur maximale ; et
- réduite au fur et à mesure que l'indicateur de pertinence diminue, la réduction du temps inter-véhicule (noté TIV) de consigne ou cible étant par exemple limitée à une valeur minimale.

L'ajustement de la valeur cible ou de consigne du TIV est par exemple obtenue en ajustant la vitesse longitudinale courante du deuxième véhicule 11 (par exemple déterminée par le premier véhicule 10 à partir des données obtenues du ou des capteurs de détection d'objet embarqués). La vitesse longitudinale ajustée $V_{ajust}$ du deuxième véhicule est par exemple déterminée en fonction de la vitesse courante $V_{cible}$ du deuxième véhicule 11 et d'une différence entre une vitesse de consigne $V_{consigne}$ du système ACC et la vitesse courante $V_{cible}$, la différence étant pondérée d'un coefficient de pondération, noté $C_p$, lequel est fonction de l'indicateur de pertinence I.

La vitesse ajustée $V_{ajust}$ du deuxième véhicule 11 est par exemple obtenue par l'équation suivante :

$$V_{ajust} = V_{cible} + C_p * (V_{consigne} - V_{cible})$$

Selon cet exemple, l'indicateur de pertinence permet de moduler ou d'ajuster la vitesse du véhicule cible utilisée en entrée du contrôleur longitudinal du système ACC pour faire en sorte que le premier véhicule 10 freine moins lorsque le deuxième véhicule 11 prend un virage ayant un rayon de courbure déterminé inférieur à un seuil (par exemple inférieur à 10, 11 ou 12 m), ce qui indique que le deuxième véhicule 11 change de trajectoire alors que le premier véhicule 10 garde la sienne. L'ajustement de l'indicateur de pertinence en fonction de l'indicateur de probabilité permet de désélectionner plus rapidement le deuxième véhicule 11 pour qu'il ne soit plus le véhicule cible alors qu'il est en train de quitter la voie de circulation 1001 sur laquelle se trouve le premier véhicule 10 et que le premier véhicule 10 conserve comme voie de circulation.

Lorsque le rayon de courbure augmente (par exemple lorsque le deuxième véhicule 11 est sur un rond-point), l'indicateur de pertinence du deuxième véhicule est peu ou pas ajusté par l'indicateur de probabilité Ip qui prend une valeur proche de 0 ou égale à 0. Cela permet de conserver le deuxième véhicule 11 comme véhicule cible dans les trajectoires comprenant des virages plus doux, tels que les ronds-points par exemple. Cela évite ainsi de désélectionner le deuxième véhicule 11 trop rapidement, ce qui pourrait générer une accélération trop brutale et non désirée du premier véhicule 10.

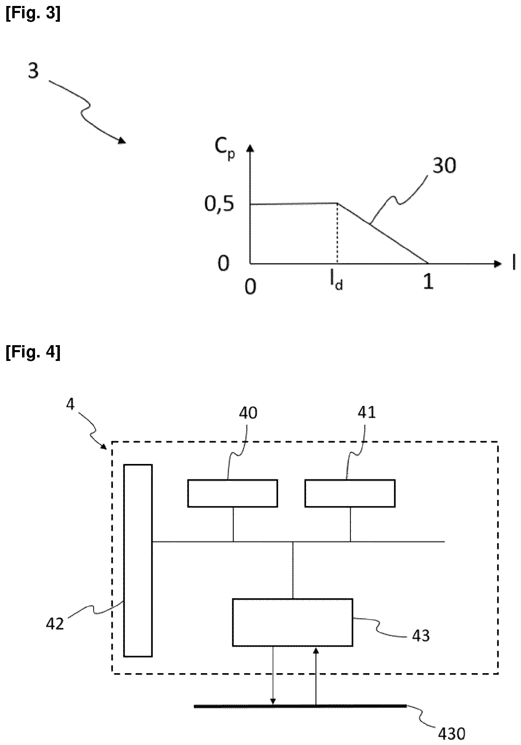

La figure 3 illustre un exemple de relation entre le coefficient de pondération $C_p$ (correspondant à l'axe des ordonnées du diagramme 3) et l'indicateur de pertinence I (correspondant à l'axe des abscisses du diagramme 3), une fonction 30 reliant ces deux grandeurs.

Selon l'exemple de la figure 3, le coefficient de pondération $C_p$ est par exemple compris entre 0 et une valeur maximale (par exemple égale à 0.5 ou à 0.6), le coefficient de pondération $C_p$ étant égal à sa valeur maximale lorsque l'indicateur de pertinence I est compris entre 0 et une valeur déterminée (notée $I_d$) inférieure à 1, le coefficient de pondération étant suivant une fonction décroissante de l'indicateur de pertinence I lorsque l'indicateur de pertinence est compris entre la valeur déterminée $I_d$ et 1

Un tel processus permet ainsi d'éviter un freinage trop important du premier véhicule 10 déclenché par le système ACC lorsque le deuxième véhicule 11 prend un virage dont le rayon de courbure est inférieur à un seuil, indiquant un changement de trajectoire du deuxième véhicule 11.

La régulation du système ACC est d'autant plus modifiée (vis-à-vis d'un mode de fonctionnement normal lorsque le deuxième véhicule reste sur sa trajectoire sans prendre de virage dont le rayon de courbure est inférieur à un seuil) que le premier véhicule 10 est loin du deuxième véhicule 11. Dit autrement, la régulation du système ACC est d'autant plus modifiée (vis-à-vis d'un mode de fonctionnement normal) que le TIV courant est élevé, avec une borne inférieure et une borne supérieure pour limiter l'ajustement.

La figure 4 illustre schématiquement un dispositif 4 configuré pour contrôler le système ACC d'un véhicule, par exemple du premier véhicule 10, selon un exemple de réalisation particulier et non limitatif de la présente invention. Le dispositif 4 correspond par exemple à un dispositif embarqué dans le premier véhicule 10, par exemple un calculateur.

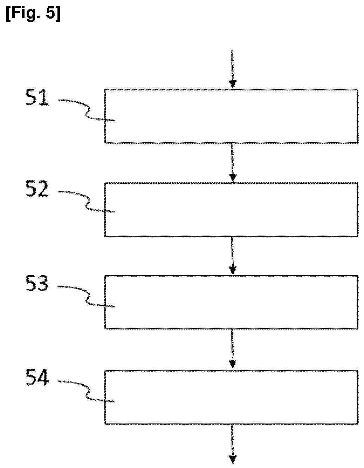

Le dispositif 4 est par exemple configuré pour la mise en œuvre des opérations décrites en regard des figures 1 à 3 et/ou des étapes du procédé décrit en regard de la figure 5. Des exemples d'un tel dispositif 4 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 4, individuellement ou en combinaison, peuvent être intégrés dans un unique circuit intégré, dans plusieurs circuits intégrés, et/ou dans des composants discrets. Le dispositif 4 peut être réalisé sous la forme de circuits électroniques ou de modules logiciels (ou informatiques) ou encore d'une combinaison de circuits électroniques et de modules logiciels.

Le dispositif 4 comprend un (ou plusieurs) processeur(s) 40 configurés pour exécuter des instructions pour la réalisation des étapes du procédé et/ou pour l'exécution des instructions du ou des logiciels embarqués dans le dispositif 4. Le processeur 40 peut inclure de la mémoire intégrée, une interface d'entrée/sortie, et différents circuits connus de l'homme du métier. Le dispositif 4 comprend en outre au moins une mémoire 41 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 41.

Selon différents exemples de réalisation particuliers et non limitatifs, le dispositif 4 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 4 comprend un bloc 42 d'éléments d'interface pour communiquer avec des dispositifs externes. Les éléments d'interface du bloc 42 comprennent une ou plusieurs des interfaces suivantes :

- interface radiofréquence RF, par exemple de type Wi-Fi® (selon IEEE 802.11), par exemple dans les bandes de fréquence à 2,4 ou 5 GHz, ou de type Bluetooth® (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif 4 via l'interface du bloc 42 en utilisant un réseau Wi-Fi® tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif 4 comprend une interface de communication 43 qui permet d'établir une communication avec d'autres dispositifs (tels que d'autres calculateurs du système embarqué) via un canal de communication 430. L'interface de communication 43 correspond par exemple à un transmetteur configuré pour transmettre et recevoir des informations et/ou des données via le canal de communication 430. L'interface de communication 43 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 4 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 4.

La figure 5 illustre un organigramme des différentes étapes d'un procédé de contrôle d'un système ACC d'un véhicule, par exemple du premier véhicule 10, selon un exemple de réalisation particulier et non limitatif de la présente invention. Le procédé est par exemple mis en œuvre par un dispositif embarqué dans le premier véhicule 10 ou par le dispositif 4 de la figure 4.

Dans une première étape 51, une première information représentative d'une vitesse longitudinale et une deuxième information représentative d'une vitesse latérale d'un deuxième véhicule correspondant à un véhicule cible dudit système ACC sont déterminées.

Dans une deuxième étape 52, un indicateur de probabilité que le deuxième véhicule effectue un virage ayant un rayon de courbure déterminé est déterminé en fonction d'un rapport de la première information sur la deuxième information.

Dans une troisième étape 53, un indicateur de pertinence associé au deuxième véhicule est déterminé en fonction de l'indicateur de probabilité

Dans une quatrième étape 54, le système ACC est contrôlé en fonction de l'indicateur de pertinence.

Selon une variante, les variantes et exemples des opérations décrits en relation avec la figure 1, 2 et/ou 3 s'appliquent aux étapes du procédé de la figure 5.

Bien entendu, la présente invention ne se limite pas aux exemples de réalisation décrits ci-avant mais s'étend à un procédé de contrôle d'un véhicule, par exemple un véhicule autonome, qui inclurait des étapes secondaires sans pour cela sortir de la portée de la présente invention. Il en serait de même d'un dispositif configuré pour la mise en œuvre d'un tel procédé.

La présente invention concerne également un système de régulation adaptative de vitesse pour véhicule comprenant le dispositif 4 de la figure 4.

La présente invention concerne également un véhicule, par exemple automobile ou plus généralement un véhicule autonome à moteur terrestre, comprenant le dispositif 4 de la figure 4 ou le système de régulation adaptative de vitesse pour véhicule ci-dessus.

## Revendications

**1.** Procédé de contrôle d'un système de régulation adaptative de vitesse, dit système ACC, d'un premier véhicule (10), ledit procédé comprenant les étapes suivantes :

- détermination (51) d'une première information représentative d'une vitesse longitudinale et d'une deuxième information représentative d'une vitesse latérale d'un deuxième véhicule (11) correspondant à un véhicule cible dudit système ACC ;

**caractérisé en ce que** le procédé comprend les étapes de :

- détermination (52) d'un indicateur de probabilité que ledit deuxième véhicule (11) effectue un virage ayant un rayon de courbure déterminé en fonction d'un rapport de ladite première information sur ladite deuxième information ;
- détermination (53) d'un indicateur de pertinence associé audit deuxième véhicule (11) en fonction dudit indicateur de probabilité ;
- contrôle (54) dudit système ACC en fonction dudit indicateur de pertinence.

**2.** Procédé selon la revendication 1, pour lequel ledit indicateur de probabilité est fonction d'un coefficient correspondant au rapport de la somme de ladite vitesse latérale et d'une constante sur la valeur absolue de ladite vitesse longitudinale.

**3.** Procédé selon la revendication 2, pour lequel ladite constante est égale à 2 m/s.

**4.** Procédé selon la revendication 2 ou 3, pour lequel ledit indicateur de probabilité prend une valeur minimale déterminée pour toute valeur supérieure à une valeur maximale déterminée dudit coefficient et ledit indicateur de probabilité prend une valeur maximale déterminée pour toute valeur inférieure à une valeur minimale déterminée dudit coefficient.

**5.** Procédé selon la revendication 4, pour lequel ladite valeur minimale déterminée dudit coefficient est égale à 1.33 et ladite valeur maximale déterminée dudit coefficient est égale à 2.

**6.** Procédé selon l'une des revendications 1 à 5, pour lequel ledit contrôle dudit système ACC comprend un ajustement d'une valeur de temps inter-véhicules de consigne en fonction dudit indicateur de pertinence.

**7.** Procédé selon la revendication 6, pour lequel ledit ajustement de la valeur de temps inter-véhicules de consigne est obtenu en déterminant une vitesse ajustée dudit deuxième véhicule (11), ladite vitesse ajustée étant déterminée en fonction d'une vitesse courante dudit deuxième véhicule (11) et d'une différence entre une vitesse de consigne dudit système ACC et ladite vitesse courante, ladite différence étant pondérée d'un coefficient de pondération fonction dudit indicateur de pertinence.

**8.** Procédé selon la revendication 7, pour lequel, ledit indicateur de pertinence étant compris entre 0 et 1, ledit coefficient de pondération étant compris entre 0 et une valeur maximale, ledit coefficient de pondération étant égal à sa valeur maximale lorsque ledit indicateur de pertinence est compris entre 0 et une valeur déterminée inférieure à 1, ledit coefficient de pondération étant suivant une fonction décroissante dudit indicateur de pertinence lorsque ledit indicateur de pertinence est compris entre ladite valeur déterminée et 1.

**9.** Dispositif (4) de contrôle d'un système de régulation adaptative de vitesse de véhicule, ledit dispositif (4) comprenant une mémoire (41) associée à au moins un processeur (40) configuré pour la mise en œuvre des étapes du procédé selon l'une quelconque des revendications 1 à 8.

**10.** Véhicule (10) comprenant le dispositif (4) selon la revendication 9.


## Patentansprüche

**1.** Verfahren zur Steuerung eines ACC-Systems eines ersten Fahrzeugs (10), wobei das Verfahren die folgenden Schritte umfasst:

- Bestimmung (51) einer ersten Information, die für eine Längsgeschwindigkeit repräsentativ ist, und einer zweiten Information, die für eine Seitengeschwindigkeit eines zweiten Fahrzeugs (11) repräsentativ ist, das einem Zielfahrzeug des ACC-Systems entspricht;

**dadurch gekennzeichnet, dass** das Verfahren die folgenden Schritte umfasst:

- Bestimmung (52) eines Wahrscheinlichkeitsindikators, dass das zweite Fahrzeug (11) eine Kurve mit einem Krümmungsradius ausführt, der in Abhängigkeit von einem Verhältnis der ersten Information zu der zweiten Information bestimmt wird;
- Bestimmung (53) eines dem zweiten Fahrzeug (11) zugeordneten Relevanzindikators in Abhängigkeit von dem Wahrscheinlichkeitsindikator;

- Prüfung (54) des ACC-Systems in Abhängigkeit von dem Relevanzindikator.

**2.** Verfahren nach Anspruch 1, bei dem der Wahrscheinlichkeitsindikator eine Funktion eines Koeffizienten ist, der dem Verhältnis der Summe der Seitengeschwindigkeit und einer Konstante zum Absolutwert der Längsgeschwindigkeit entspricht.

**3.** Verfahren nach Anspruch 2, wobei die Konstante 2 m/s beträgt.

**4.** Verfahren nach Anspruch 2 oder 3, bei dem der Wahrscheinlichkeitsindikator einen bestimmten Minimalwert für jeden Wert annimmt, der größer als ein bestimmter Maximalwert des Koeffizienten ist, und der Wahrscheinlichkeitsindikator einen bestimmten Maximalwert für jeden Wert annimmt, der kleiner als ein bestimmter Minimalwert des Koeffizienten ist.

**5.** Verfahren nach Anspruch 4, bei dem der bestimmte Minimalwert des Koeffizienten gleich 1,33 und der bestimmte Maximalwert des Koeffizienten gleich 2 ist.

**6.** Verfahren nach einem der Ansprüche 1 bis 5, bei dem das Überwachen des ACC-Systems das Einstellen eines Soll-Inter-Fahrzeug-Zeitwertes in Abhängigkeit von dem Relevanzindikator umfasst.

**7.** Verfahren nach Anspruch 6, bei dem die Einstellung des Soll-Inter-Fahrzeug-Zeitwertes durch Bestimmen einer angepassten Geschwindigkeit des zweiten Fahrzeugs (11) erhalten wird, wobei die angepasste Geschwindigkeit als eine Funktion einer aktuellen Geschwindigkeit des zweiten Fahrzeugs (11) und einer Differenz zwischen einer Soll-Geschwindigkeit des ACC-Systems und der aktuellen Geschwindigkeit bestimmt wird, wobei die Differenz mit einem Gewichtungskoeffizienten als eine Funktion des Relevanzindikators gewichtet wird.

**8.** Verfahren nach Anspruch 7, wobei der Relevanzindikator zwischen 0 und 1 liegt, der Gewichtungskoeffizient zwischen 0 und einem Maximalwert liegt, der Gewichtungskoeffizient gleich seinem Maximalwert ist, wenn der Relevanzindikator zwischen 0 und einem bestimmten Wert kleiner als 1 liegt, wobei der Gewichtungskoeffizient einer abnehmenden Funktion des Relevanzindikators folgt, wenn der Relevanzindikator zwischen dem bestimmten Wert und 1 liegt.

**9.** Vorrichtung (4) zur Steuerung eines adaptiven Fahrzeuggeschwindigkeitsregelungssystems, wobei die Vorrichtung (4) einen Speicher (41) umfasst, der mindestens einem Prozessor (40) zugeordnet ist, der zur Durchführung der Schritte des Verfahrens nach einem der Ansprüche 1 bis 8 konfiguriert ist.

**10.** Fahrzeug (10) mit der Vorrichtung (4) nach Anspruch 9.

## Claims

**1.** A method for controlling an adaptive speed control system, referred to as an ACC system, of a first vehicle (10), said method comprising the following steps:

- determination (51) of a first piece of information representative of a longitudinal speed and of a second piece of information representative of a lateral speed of a second vehicle (11) corresponding to a target vehicle of said ACC system;

**characterised in that** the method comprises the steps of:

- determination (52) of an indicator of the probability that said second vehicle (11) is making a turn having a radius of curvature determined as a function of a report of said first information on said second information;
- determination (53) of a relevance indicator associated with said second vehicle (11) as a function of said probability indicator;
- control (54) of said ACC system as a function of said relevance indicator.

**2.** Method according to claim 1, wherein said probability indicator is a function of a coefficient corresponding to the report of the sum of said lateral speed and a constant over the absolute value of said longitudinal speed.

**3.** Method according to claim 2, for which said constant is equal to 2 m/s.

**4.** Method according to claim 2 or 3, wherein said probability indicator takes a minimum value determined for any value greater than a maximum value determined for said coefficient and said probability indicator takes a maximum value determined for any value less than a minimum value determined for said coefficient.

**5.** Method according to claim 4, for which said determined minimum value of said coefficient is equal to 1.33 and said determined maximum value of said coefficient is equal to 2.

**6.** Method according to one of claims 1 to 5, for which the said control of the said ACC system comprises an adjustment of a setpoint inter-vehicle time value as a function of the said relevance indicator.

7. Method according to claim 6, for which the said adjustment of the setpoint inter-vehicle time value is obtained by determining an adjusted speed of the said second vehicle (11), the said adjusted speed being determined as a function of a current speed of the said second vehicle (11) and of a difference between a setpoint speed of the said ACC system and the said current speed, the said difference being weighted by a balance coefficient as a function of the said relevance indicator.

8. Method according to claim 7, wherein said relevance indicator is between 0 and 1, said balance coefficient being between 0 and a maximum value, said balance coefficient being equal to its maximum value when said relevance indicator is between 0 and a determined value less than 1, said balance coefficient being according to a decreasing function of said relevance indicator when said relevance indicator is between said determined value and 1.

9. Device (4) for controlling an adaptive speed regulation system of a vehicle, said device (4) comprising a memory (41) associated with at least one processor (40) configured for implementing the steps of the method according to any one of claims 1 to 8.

10. Vehicle (10) comprising the device (4) according to claim 9.

[Fig. 1]

[Fig. 2]

[Fig. 3]

[Fig. 4]

[Fig. 5]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 3087732 A1